# EUROPEAN PATENT APPLICATION

(11) **EP 1 840 773 A1**
(43) Date of publication of application: **03.10.2007**
(21) Application number: 07105156.9
(22) Date of filing: 28.03.2007
(51) Int. Cl.: G06F 17/30

(54) **A web-embedded expert system**

(30) Priority: 28.03.2006 IE 20060236
(71) Applicant: MacKenzie, Douglas, Westport Mayo (IE); Kydd, Robert Alexander, Edinburgh EH6 8TV (GB)
(72) Inventor: MacKenzie, Douglas, Westport Mayo (IE); Kydd, Robert Alexander, Edinburgh EH6 8TV (GB)
(74) Representative: O'Connor, Donal Henry

(57) **Abstract**

This invention relates to a web embedded expert system and a method of operating same for use in a computing system comprising a database, a web browser operable by a user of the computing system and a web server. The database has a web embedded expert system layer associated therewith containing one or more rules specific to the information contained in the database thereon. The rules may be specified by the user, an operator of the expert system layer or by the layer itself based on usage patterns of the database. The web embedded expert system has means to present information from the database in response to a search request in accordance with those rules. The information is supplied in an orderly manner and only information that is of some relevance to the user will be contained in the results returned to the user.

## Description

### Introduction

This invention relates to a web-embedded expert system for use with a database-backed website, the website having access to a database containing information and allowing remote users to search the information contained in the database through the website using a suitable browser.

Since the introduction of the internet and more specifically the World Wide Web some years ago, the sheer volume of content accessible by individuals has grown exponentially. Information relating to practically every topic and field may be found through internet searches. Indeed, many companies have focussed their attention on internet sales and as such offer various goods and services through websites which may be accessed by individuals using a suitable web browser. Often, these websites are dependent on one or more databases from which information that may be requested by the users may be retrieved and thereafter presented to the users. Although there are huge benefits to the general public and companies in being able to provide information in this manner, there are problems with the known systems and methods of providing the information from database-backed websites.

First of all, these database-backed websites usually have access to a vast amount of data. The user navigating the website may do so by choosing a link on the website if available to navigate to the particular page or item of interest. However, in certain circumstances a direct link may not be available or if the website has not been designed particularly effectively, the required item may not be accessible in a very intuitive manner. In order to overcome these difficulties, many websites provide a search facility whereby a user may carry out a word search of the website to see if there are any matching terms on that website database that match their criteria. Quite often, such a search will result in a large number of search results being returned which the individual must trawl through one at a time in order to obtain the item that they are looking for. Sometimes, they may be lucky and the appropriate page may be in the first couple of search results returned to them, but in many cases a significant amount of time must be spent trawling through the search results.

Alternatively, this search may use a word or phrase search on specific database fields. The number of fields searched is generally limited and may not include the field, or combination of fields, the user requires to search to meet his or her needs. Furthermore, various search engines such as Google (Registered Trade Mark (RTM)) may be used to search either one site or a vast number of sites and depending on the search terms entered by the user, an unwieldy amount of information may be returned to them to sift through. This is highly undesirable and time-consuming to the user. Various systems and methods have been suggested to overcome these difficulties so that the search terms may be narrowed further such as the use of Boolean operators and the like. However, these are often cumbersome and ineffective in assisting with the search.

One solution that has been proposed to overcome these problems is the provision of expert systems. These expert systems essentially require the data contained in the system to be arranged in a very structured format to facilitate specific searching. Although quite effective for limiting the amount of unwanted results in a search, these systems suffer from the disadvantage that they require all of the data in the database to be entered in a very structured manner and therefore for those databases already in use what is needed is an entire redesign of the database and an entire reconfiguration of the database which is extremely costly and time-consuming to perform. It is not possible to easily apply these systems retrospectively to the existing databases and therefore there is a general unwillingness to convert to such systems.

Generally speaking, such searches are directed only towards one result, a particular destination on a travel site or a particular item on an e-commerce retail site. However, a user may wish to purchase a number of different items from a particular website. In order to do so, they must search for each item individually, and, especially in travel-booking applications, go through several individual and separate credit card transactions. Not only is this is quite time-consuming to carry out and more difficult than if the user could specify multiple items that they require within certain criteria, but also, by the time one transaction is complete another transaction which depends on it may not be available. For example, a reservation at a cheap hotel in Prague is of little use if, by the time it is confirmed, the flight to Prague is no longer available. Unfortunately, the known systems and structures adopted by them do not facilitate such requests.

Traditional expert systems are not databases in the general sense of the term but rather essentially involve two components, a knowledge base and an inference engine. Conceptually, the knowledge base holds the data and the inference engine controls the rules. However the knowledge base is typically written as a set of rules itself, connecting 'atomic' elements of knowledge via logical operators (and/or/not etc) describing the domain. It may be further structured by means of an ontology which defines classes of entities which are to be included and the relationships between them. The inference engine has three types of rules within it, match, select and fire. Simply put, 'match' pulls out a set of rules which match the input. Conflict between rules is sorted out by the second set ('select') and the 'fire' rules do the work.

It is an object therefore of the present invention to provide a web-embedded expert system for use with a database-backed website that overcomes at least some of these difficulties that is relatively cost efficient to implement, relatively simple to operate and efficient in use. It is a further object of the present invention to provide an improved method of processing searches of a database-backed website

### Statements of Invention

According to the invention there is provided a method of processing searches of a database-backed website in a computing system, the computing system comprising a database having data stored therein, a user interface having access to the database, a web server and a remote web browser, the computing system further comprising an expert system layer associated with the database, the expert system layer having one or more rules specific to the information contained in the database, the method comprising the steps of:
the web server receiving a database search request issued by a user of the remote web browser;
the web server passing the database search request onwards to the database via the expert system layer, the expert system layer applying at least one rule specific to the information contained in the database to the database search request;
performing a search of the data contained in the database and retrieving result data in accordance with the search request and the rule from the database;
filtering the result data retrieved in the search through the expert system layer associated with the database using at least one rule specific to the information contained in the database; and
returning the filtered result data to the web browser of the user that issued the database search request via the web server.

In one embodiment of the invention there is provided a method in which web page information sent to the web browser is configured in accordance with rules specified in the expert system layer.

In another embodiment of the invention there is provided a method of processing searches of a database-backed website in which the step of filtering the result data using at least one rule specific to the information contained in the database further comprises filtering the data using at least one rule specific to the user of the browser making the search.

In a further embodiment of the invention there is provided a method of processing searches of a database-backed website in which the step of filtering the result data using at least one rule specific to the information contained in the database further comprises filtering the data using at least one rule based on the usage of the database.

In one embodiment of the invention there is provided a method of processing searches of a database-backed website in which the method further comprises the steps of monitoring the usage of the database and thereafter generating a rule based on the usage of the database and updating the expert system layer rules.

In another embodiment of the invention there is provided a method in which the method further comprises receiving a database search request issued by a user containing a plurality of search criteria and thereafter performing a plurality of searches of the data contained in the database and retrieving result data in accordance with each of the search criteria in the search request from the database.

In a further embodiment of the invention there is provided a method in which the method further comprises the step of filtering the result data retrieved in each of the plurality of searches through the expert system layer associated with the database using at least one rule specific to the information contained in the database.

In one embodiment of the invention there is provided a method in which the method further comprises the step of returning the filtered result data of each of the plurality of searches to the web browser of the user that issued the database search request via the web server.

In another embodiment of the invention there is provided a method in which the filtered result data of each of the plurality of searches is returned to the web browser of the user that issued the database search request in a single web page format.

In a further embodiment of the invention there is provided a method in which the method comprises the step of the expert system layer transforming the content of the rules into a scripting language used to create web pages.

In one embodiment of the invention there is provided a method in which a website display for viewing on the browser is built by the web server on the fly using the filtered results from the database and using rules of the expert system layer expressed in a scripting language.

In another embodiment of the invention there is provided a method in which the rules are subdivided into hard coded rules and rules in a hierarchical structure, and the method further comprises the step of performing the hard coded rules prior to performing the remaining rules in the hierarchical structure in a hierarchical fashion.

In a further embodiment of the invention there is provided a method in which the results are passed back through the expert system layer and the expert system layer uses the results to partially control the display of the website viewed by the user on their browser.

In one embodiment of the invention there is provided a method in which expert system layer further comprises a mediator and the mediator resolves a series of potentially conflicting results generated from a search request.

In another embodiment of the invention there is provided a method in which the method comprises the steps of performing a plurality of refined searches on the results of a search prior to returning the results to the user.

In a further embodiment of the invention there is provided a method in which the search engine uses different criteria for searching different databases or searching different parts of a database.

In one embodiment of the invention there is provided a method in which the rules of the expert system layer collate the results into a meaningful response to the user of the browser that initiated the request.

In another embodiment of the invention there is provided a method in which the search engine is a separate search engine carrying out searches of a further database and the method comprises the step of filtering the results of the separate search engine through the expert system layer and applying one or more rules of the expert system layer to those results before providing the filtered results of the search to the user.

In a further embodiment of the invention there is provided a method in which the expert system layer carries out a search of html pages output as results by the separate search engine.

In another embodiment of the invention there is provided a method in which the expert system layer imports the results of the separate search engine to a database prior to carrying out a search of the results.

In another embodiment of the invention there is provided a method in which the expert system layer filters the results of the separate search engine, stores the URLs of the filtered results, retrieves the pages associated with the stored URLs and searches the pages using the rules in the expert system layer.

In another embodiment of the invention there is provided a web-embedded expert system for use with a database-backed website, the database-backed website having access to the database containing data and allowing remote users submit search requests to search the data contained in the database through the website using a suitable browser, the web-embedded expert system further comprises:
an expert system layer associated with the database, the expert system layer having rules specific to the information contained in the database thereon and means to apply at least one of the rules to a search request prior to carrying out the search and means to filter the results of the search in response to the search request in accordance with at least one of the rules prior to returning the filtered results to the user.

By having such a system, it is possible to assign rules to the data contained in the database retrospectively. This is achieved by providing the additional expert system layer to the database which may be carried out in a relatively straightforward manner. Therefore, it is no longer necessary to provide a system in which the data must all be structured in the database in a particular pre-defined manner from the outset. The addition of the expert system layer allows more efficient searching of the data and the system in existing databases also with the minimum of difficulty. This is particularly useful as this will allow for the existing databases to be searched more effectively and furthermore will mean that the owners of the database-backed websites do not have to alter their entire systems in order to meet their customer's needs. By having the rules, results to the searches posed by users may be returned to them in a more distinct manner with only that information that is particularly relevant to them being provided. Additional information that is of no interest to the user will not be presented to them according to the rules and they will not have to waste valuable time trawling through unnecessary information. Furthermore, the users may present multiple items for searching at the same time which will be returned individually to the user without them having to make numerous different searches of the database.

In another embodiment of the invention there is provided a web embedded expert system for use with a database-backed website in which the expert system layer has means to configure a web page for subsequent transmission to the browser in accordance with rules specified in the expert system layer.

In one embodiment of the invention there is provided a web-embedded expert system for use with a database-backed website in which the expert system layer contains rules specific to the user of the browser making the search. By having such a system, the user may also have certain preferences associated with them such as only non-smoking rooms in hotels are acceptable to them or restaurants with average meal price of under €50/head are retrieved. In this way, user preferences may also dictate the amount and quality of the information retrieved. These user rules may be stored by the expert system layer so that the user does not have to enter them each time that they wish to make a search.

In another embodiment of the invention there is provided a web-embedded expert system for use with a database-backed website in which the expert system layer contains rules based on the usage of the database. In this way, the expert system layer may notice certain trends associated with the results that it returns to a particular search. For example, if a particular search is for hotels in Kensington, London priced at under £100 per night and it is found that certain hotels are being chosen over others by a strong majority of users, say 90% of users wish to use one hotel above another, the expert system layer may create rules based on that usage and may decide to present only the hotel favoured by the vast majority of users or alternatively can present that information with the more popular hotel shown first.

In a further embodiment of the invention there is provided a web-embedded expert system for use with a database-backed website in which the expert system layer has means to monitor database searches and means to generate rules based on usage of the database. In this way, the expert system layer may itself generate the rules based on usage over time without the need for external interference. It is envisaged that the expert system layer may also present the proposed rule to an administrator of the database before implementing the rule in order to gain approval of the rule prior to altering the rules of the expert system layer.

In another embodiment of the invention there is provided a web-embedded expert system for use with a database-backed website in which the expert system layer is formed integrally with the database. Alternatively, the expert system layer is based on a separate device located remote from the database with access to the database.

In another embodiment of the invention there is provided a web-embedded expert system for use with a database-backed website in which the expert system layer is provided with an interface to allow a website builder to specify rules. This is seen as a particularly simple and efficient way of allowing the rules to be updated if and when desired. The main advantage here is not the writing of rules themselves but how they are written vis-a-vis the knowledge encapsulated within the expert-system layer is the knowledge of a human expert familiar with the knowledge domain. As the traditional expert system structure is inappropriate, traditional website database technology would require rules to be written in a specialised business process rules script or as database queries in SQL (Structured Query Language) or similar. Implementing this approach requires the needs of the subject matter expert to be interpreted by a systems analyst or programmer, adding to the complexity and cost of the task and increasing the possibilities of misunderstanding. The present invention incorporates an interface which allows the subject matter expert to specify rules directly in an easy to understand natural language format. It is then the role of the system itself to translate these to database queries and to apply the necessary combination of results.

In a further embodiment of the invention there is provided a web-embedded expert system for use with a database-backed website in which the means to present information further comprises means to present multiple disparate search requests at the same time. This is seen as particularly useful as by having means to present multiple disparate search requests at the same time, it is possible for the users of the system to carry out multiple searches simultaneously without having to go through each search sequentially. For example, the user may be searching for the ingredients of a particular recipe as part of a shopping list on an online supermarket website. Unless all the ingredients are available, the recipe cannot be used. Instead of having to search for each of the ingredients one by one and insert them into the shopping basket individually, the user can carry out a search for all ingredients simultaneously and will be able to see whether all ingredients are available to them. If they are not the user can cancel the order and not order any of the ingredients of that recipe. Similarly, when booking a trip away, instead of having to book flights, accommodation, car hire, crèche facilities, golf tee times, golf club rental and insurance all separately, the user may carry out all searches simultaneously and present all results at the same time so that the entire itinerary may be presented at the same time and the total cost of the entire holiday excluding other miscellaneous items may be determined. Again, this has particular advantages as the individual booking the trip may determine that it is not possible to get reasonable hotel accommodation with crèche facilities at that particular time and therefore the rest of their holiday plans that might be dependent on this aspect will not be booked in advance.

In another embodiment of the invention there is provided a web-embedded expert system in which the expert system layer is associated with a plurality of databases and the expert system layer contains rules specific to a plurality of databases. Furthermore, there is provided a web-embedded expert system for use with a database-backed website in which the expert system layer is an integral part of a website display mechanism. In one embodiment of the invention, the expert system layer comprises a plurality of rules stored within a database table. Preferably, the rules in the database table are stored in the same database used to store the data used to generate the website.

### Detailed description of the Invention

The invention will now be more clearly understood from the following description of some embodiments thereof, given by way of example only with reference to the accompanying drawings, in which:-
Figure 1 is a diagrammatic representation of information flow from a database-backed website known in the art; and
Figure 2 is a diagrammatic representation of a web-embedded expert system according to the present invention.

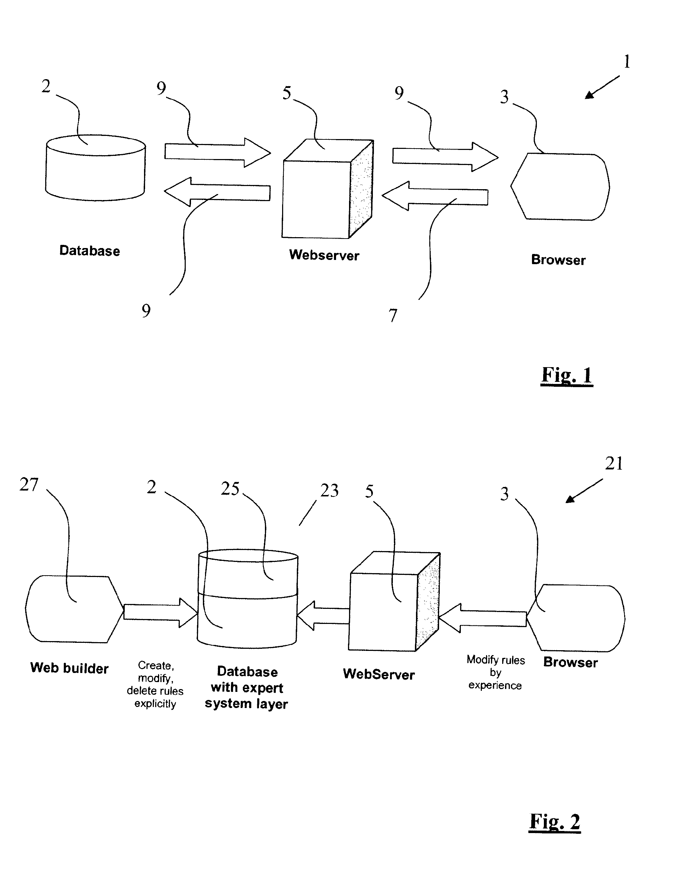

Referring to the drawings and initially to Figure 1 thereof, there is shown a diagrammatic representation of a computing system, indicated generally by the reference numeral 1, and the information flow to and from a database-backed website forming part of the computing system, known in the art. A database 2 contains information accessible through a particular website, such as flight information and reservations information through an airline website, and may be accessed by users (not shown) with an appropriate browser 3 through a web server 5. The user places an information request 7 to the database-backed website through the web server 5, which request is in turn passed on to the database 2. Information is retrieved from the database 2 before a response 9 is returned to the user via the web server 5 for viewing on their browser 3. Information may also be passed to the database 2 from the user via their browser 3 and the web server 5 such as the credit card details of the user in order to secure a flight or other such goods or services.

The web pages displayed on the browser are created on the fly in response to the input supplied by the user. A series of page templates are populated from the database 2 by means of a scripting language such as PHP, ASP or other scripting language, as they are presented to the user. In this way, the requested information may be retrieved from the database 2 and transmitted to the user for viewing on their browser 3 in a reasonably efficient manner. If an explicit hyperlink to the required information is not provided in the page content or if data must be manually gathered from a number of pages, the website will typically be provided with a search facility based on keywords of free text searching or database field search. A list of results will be returned to the user for viewing on their browser 3 and from that list of results the user may or may not be able to find their desired information.

The lists may be ordered by various criteria but these are not necessarily helpful. Much of the information retrieved will be largely irrelevant to the user. In particular, although certain results may be returned in accordance with predefined criteria input as search terms by the user, no attempt is made to provide the information tailored according to information specific to the database nor can this search format cope with presenting multiple answers which are dependent one upon the other.

Referring to Figure 2 of the drawings there is shown a diagrammatic representation of a computing system, indicated generally by the reference numeral 21, containing a web-embedded expert system 23 according to the present invention. Like parts are identified by the same reference numerals as before. The web-embedded expert system 23 comprises a database 2 having information thereon that may be accessed in the normal manner by users through a browser 3. The database 2 is again further accessed through a web server 5. The database 2 comprises an expert system layer 25 linked thereto so that data may be passed between the database 2 and the expert system layer. The expert system layer is provided with a user interface (not shown) to receive information from a web builder 27. The expert system layer 25 has rules specific to the information contained in the database 2 thereon and is further provided with means (not shown) to present information in response to a search request in accordance with those rules.

In use, a user will enter a search request into their browser 3 and this will be directed through a web server (not shown). The expert system has a series of overriding systemic rules, some provided by the developers of the website and specific to the website with which the expert system is being used (there can be up to five flights, twenty hotel nights etc) and some provided by the web user (total cost must not exceed €X, destinations must include W, Y and Z, and hotel accommodation must be 'child friendly'). Specific rules will then determine whether flights are available, what constitutes child friendly (if, for example, it is not a specific field in the database e.g. by including hotels which offer family bedrooms, high chairs in the restaurant, crèche facilities and baby-sitting). The specific rules generate a series of database queries which produce results which are combined, filtered, accepted or rejected before being presented to the web user in the format specified by the system template. The rules may be simply related to content, as in the hotel description, or may involve background transaction processing, not only is there a flight but it has the required number of seats available and these will be held for the user for a short while after the answer template (itinerary) is presented on-screen.

Preferably, the expert system layer 25 has means to monitor the accesses to the database and generate rules based on that usage. The expert system layer 25 is shown formed integrally with the database 2 but alternatively could be located remote from the database if desired. From a technical point of view the expert system layer could reside in the same database or could be on an entirely separate machine in a different location. An advantage of the second of these approaches is that it allows for more control over the expert system layer and the use customers make of it and, indeed, how the service may be charged for. What is important is that it does not require any changes to or control over the existing database, this is a big advantage. Other existing systems are not affected by the introduction of the expert system layer and there are no commercial considerations or security issues for the database operators because it does not require a change to the core database. Rules may be specified, edited and deleted by the system operator via the web builder and the semanto-syntactic content of the rules are transformed automatically by the expert system layer to a scripting language, such as SQL, that is used to create the web pages.

Certain searches are not for single items: they may be the cities required in a travel itinerary or the reading preferences of several people included in a gift list. In building the itinerary, there is no point in returning a flight from city A to city B if there is no onward connection to city C, and no available hotel in city B. However, in relation to the specific example provided above, it is envisaged that a scenario may arise in which the site determines that it is not possible to fly A to B and then to C within a predetermined timeframe due to the fact that there is no suitable accommodation at B on the specified dates, however it notes that it may be possible to fly from A to C and then come back to A via B later on within the given time frame when accommodation is available in B. In other words, the system notes that a particular itinerary is not possible but a simple modification would be possible in which case it suggests the modified alternative itinerary to the user. Similarly the completed gift list will have certain overriding criteria, not exceeding a certain price, for example. The rule base therefore combines knowledge the system has, which hotels are in which city, which flights connect and what the availability is etc with criteria imposed by the user, the cities and hotel types required and the date range for travel. Google (RTM) searches and the like provide objective searches, matching only on text patterns. The present invention involves subjective searching, imposing the criteria of the system (what it knows about the specific knowledge domain) and those of the user and then applying further rules to build an itinerary (if leaving city A on Monday morning then need a hotel in that city on Sunday night) or list (all books must be shipped to arrive by Christmas and not exceed a total of $100).

A text-based search, such as Google (RTM), simply matches all the pages containing the searched for text and displays them in a long list. It is then often possible to do a search of the subset of results. By using the expert system layer according to the present invention, we are, in effect, doing these refined searches in the background, though matching on more than just text strings, while, at the same time, applying the rules describing the knowledge domain and resolving any conflicts between them. All the subsets of results are processed in the background, the user does not see them until a final selection is arrived at. Due to this, it makes no difference whether one database or many are being searched. There is only one search engine although it may use different criteria for searching different databases, or parts of databases. It is the rules in the expert system layer which collate the results into a meaningful answer whether that be a book list, an itinerary or a diagnosis.

The rules can be defined and modified by the subject matter experts involved with the content of the website to embed their expertise in the knowledge domain. This is done with an interactive interface to the fields in the database but at a level removed from its structure. Ultimately all searches of database are performed by a query language (SQL or some variant of this) but the rules specified by non-technical users need not concern themselves with this level of detail: the system will build and execute the queries, and combine their results, in the background. The translation is not always from a natural language format but rather it is a translation from a series of potentially conflicting requirements, e.g. flight and hotel and car hire under £1000 when a certain number of suitable flights and hotels are full.

It is envisaged that there will be some system rules hard coded which define basic facts about the knowledge domain and these will be run first in any filtering operation. Thereafter, the rules which are added by users (such as the system designers) are edited within a hierarchy which determines, by user choice, the order in which the rules are implemented.

The concept of a 'user defined rule' is something added after the database is constructed and which 'adds value'. Using an example of a database of hotels that is constructed, typically, there will be various fields in the database to describe the hotels including star rating, restaurant opening hours, room configurations and the like. Now suppose that after that database has been linked to a website the company running the website decides it wants to promote 'child-friendly holidays'. If the hotel database belongs to them they could add a yes/no field to it for 'child friendly' and manually populate that. However, this might mean going through tens of thousands of hotel entries and is not an exercise the company would want to repeat every time a new sales campaign comes along. Often though, the website company will be using someone else's database and so they will not be able to make changes to the database design even if they wanted to. They will, in either case, need to make changes to the website to incorporate the child friendly option. The rules interface incorporated in the present invention allows an option 'child friendly' to be created by a non-technical user writing a rule. The rule would take the form of, for example, 'hotel having family rooms'; 'restaurant opens for dinner before 1730'; textual description of the hotel contains the string 'baby sitting' and or 'creche', 'kids club' and the like. That same interface can also allow the designer to add this as a search option to the web page.

It is envisaged that by providing a system such as that described, it will be possible to facilitate the searching of existing web sites with extensive databases behind them. Furthermore, it will be possible to allow for multiple search requests to be submitted in one search and for the results of those multiple searches and search terms to be returned in a meaningful format. For example, in the case of an online retailer, it will now be possible to request a number of disparate items such as CDs, DVDs, books and the like in the one request all to be returned under a particular price and the database may be searched simultaneously for all of the requested items within the search criteria within the price bracket. Websites which have searches which search particular database fields search only the specified field - searching for a particular destination in a travel website for example. The invention allows rules to be constructed which define the relationship of data within certain fields one to another e.g. a search for Scotland as a flight destination groups Prestwick, Aberdeen, Glasgow and Edinburgh or between fields, 'sunny in June' specified the relationship between the destination field and a June temperature field where the mean daily temperature >20C.

Another example of the functionality of the system is in the field of travel. Previously, one would have to access one or more sites to book flights and then another site to book accommodation and another to book car hire online. This was quite cumbersome and time consuming to carry out. Furthermore, these sites did not allow for the entire vacation to be researched and decided upon and checked for availability before finalising the vacation and booking it all through the one site. This is now possible using the present invention as a complete itinerary including multi destination trips, car hire and excursions may be planned in advance and booked simultaneously. It is further possible to filter multiple matches to a search query into one or a few search results and to facilitate diagnostic type queries, e.g. what is the cheapest flight destination on a particular given day.

It will be understood that throughout the specification the term user defined rules has been used. This term is intended not simply to mean those rules implemented by an end user carrying out the search but in many cases will in fact be rules implemented by a technical or non-technical web site builder that can stipulate various rules to the information contained in the database.

A further aspect of the present invention is that the method and expert system layer proposed could be used in a stand-alone fashion, i.e. as a filter for results returned by another search engine such as Google (RTM). In other words, the present invention could simply be used to filter results of other searches. Firstly, an important aspect is that the invention is web-embedded so there would be a webpage/website to do the filter of the Google (RTM) search and that website would be driven by a database. Secondly, it would be possible to search the html pages output by a Google (RTM) search however it is envisaged that it would be more efficient to import the results to a database and search that, a process transparent to the user of such a system. Furthermore, the use of a database would be preferred due to the fact that the amount of useful reasoning we could apply to the two lines of text returned by a Google (RTM) search is extremely limited. What is more likely is that the Google (RTM) results would be filtered initially and then, having stored the URLs of the search results, the pages correlating to the URLs would be retrieved and those pages searched using rules in the expert system layer according to the present invention.

It will be understood that one of the main differences between a traditional expert system and a system according to the present invention is that a traditional expert system is built as such from scratch, the data is structured into a knowledge domain specifically for the purpose of answering the limited set of questions which will be put to the 'expert'. The present invention is 'joined on' on to existing structures (hence the term 'layer'), more specifically the present invention is 'joined on' to databases. These databases may already exist for commercial reasons (as part of a booking system, keeping track of stock, collecting articles on a particular topic). The expert system layer can be added to these proprietary databases, created for different purposes, to add an intelligent search function to the databases. Using the traditional expert system building techniques there is no way a catalogue of data, for example, can be transformed into an expert system without completely rebuilding it in a quite different form.

Physically, the expert system layer consists of rules stored within database tables, the same database which contains the everyday catalogue of products, articles, services and which is used to generate the website. It is this integration which makes it different. An inference engine deliberately separates knowledge from procedural control whereas the expert system layer according to the present invention, in some instances, applies rules to the interface display. For example, in a hotel search where the user has chosen 'fitness centre' (or something matching this semantically) the rules modify the interface to display checkboxes for swimming pool, gymnasium, sauna etc to allow the user to refine the search.

The context in which the present invention is applied is in database-backed websites. The website display is built on the fly from the database using a set of rules expressed in a scripting language (such as PHP or ASP etc). Although it is admitted that this is how standard database-backed websites work, what is unique to the present invention is that the intelligent search is built into this model by means of the expert system layer. Traditional expert systems are not part of web servers. Even if an existing database was rebuilt as an expert system that would not, in itself, make it a useful tool for searching a web site intelligently. A separate interface to the expert system would have to be built and in programming terms the two developments are conceptually different, the expert system being data driven and the web site procedural.

It will be further understood that the expert system layer is not necessarily a separate system, nor is it an external off-line database of business process rules, it is an integral part of the website display mechanism and of the database itself. Rules, and the way in which they can be modified automatically, are specified, edited and deleted by the website builder with an interface to the database. The semanto-syntactic content of the rules is transformed automatically by the layer to the scripting language (and SQL) used to create web pages. The expert system layer contain rules which are specific to the knowledge domain, specific to the user and, in some cases, automatically modified by experience (e.g. if in 90% of cases option A is preferred by users over option B, the weight assigned to option B, and the likelihood of it being displayed in future is reduced.)

Typically, requests are always routed through the layer as they come from the user to the database and the results of requests are then also usually routed through the expert system layer as they are returned to the user. However, this depends somewhat on the specific application. By way of example, a visitor searching a golf holiday planner website will build a profile of what he or she wants to do. This conditions (applies rules to) the search of the database e.g. only Open Championship qualifier courses are searched, only links courses and only those within 90 miles of Edinburgh. That search will return a set of results which then needs to be operated upon before being presented to the user. This is due to the fact that not all courses have vacancies every day so they need to be juggled into an appropriate order (to provide an itinerary). Hotels need to be selected which are appropriate to the ordered list of courses and both must fulfil accessibility criteria in terms of driving from place to place. In the instance where the layer forms part of a system which controls the display of a website, the results always come back through the layer. For example, if the ultimate goal of the search is to generate an itinerary, the expert system layer has to format the results in a way which allows an itinerary to be displayed although the itinerary format itself is not necessarily determined by the expert system layer.

It will be understood that many of the method steps are carried out on or in a computer and it is envisaged that many of the steps may be computer implemented steps in software. Therefore, the invention also extends to computer program products and computer programs, particularly to computer programs on or in a carrier, adapted for putting the invention into practice. The program may be in a form of source code, object code, or a form intermediate source code and object code. The program may be stored on or in a carrier such as any known computer readable medium such as a floppy disc, ROM, CD ROM or DVD or other recordable medium. The carrier may be a transmissible carrier such as an electrical or optical signal, which may be conveyed via electrical or optical cable or by radio or other means. When the program is embodied on a signal, which may be conveyed directly by cable or other device, the carrier may be constituted by such a cable or other device means. It is further envisaged that the computer program may be stored in an integrated circuit.

One final important aspect of the present invention is that it is not simply an innovation in a website, a database or an expert system; it is the fact that the three are integrated. There may be features of databases which allow a search of that database to be done in a particularly clever way but that doesn't mean the search can be done from a web page. It is a step further still for a modification to a database search to be directly reflected in a change in a web page's user interface. Changes to the web interface are made by the expert system layer modifying the scripting language which builds the web pages and/or adding or deleting data from the tables which populate fields on the web pages.

Throughout this specification the terms "comprise, comprises, comprised and comprising" and the terms "include, includes, included and including" are all deemed totally interchangeable and should be afforded the widest possible interpretation.

The invention is in no way limited to the embodiments hereinbefore described but may be varied in both construction and detail within the scope of the claims.

## Claims

1. A method of processing searches of a database-backed website in a computing system, the computing system comprising a database having data stored therein, a user interface having access to the database, a web server and a remote web browser, the computing system further comprising an expert system layer associated with the database, the expert system layer having one or more rules specific to the information contained in the database, the method comprising the steps of:
the web server receiving a database search request issued by a user of the remote web browser;
the web server passing the database search request onwards to the database via the expert system layer, the expert system layer applying at least one rule specific to the information contained in the database to the database search request;
performing a search of the data contained in the database and retrieving result data in accordance with the search request and the rule from the database;
filtering the result data retrieved in the search through the expert system layer associated with the database using at least one rule specific to the information contained in the database; and
returning the filtered result data to the web browser of the user that issued the database search request via the web server.

2. A method of processing searches of a database-backed website as claimed in claim 1 in which web page information sent to the web browser is configured in accordance with rules specified in the expert system layer.

3. A method of processing searches of a database-backed website as claimed in claim 1 or 2 in which the step of filtering the result data using at least one rule specific to the information contained in the database further comprises filtering the data using at least one rule specific to the user of the browser making the search.

4. A method of processing searches of a database-backed website as claimed in any preceding claim in which the step of filtering the result data using at least one rule specific to the information contained in the database further comprises filtering the data using at least one rule based on the usage of the database.

5. A method of processing searches of a database-backed website as claimed in any preceding claim in which the method further comprises the steps of monitoring the usage of the database and thereafter generating a rule based on the usage of the database and updating the expert system layer rules.

6. A method of processing searches of a database-backed website as claimed in any preceding claim in which the method further comprises receiving a database search request issued by a user containing a plurality of search criteria and thereafter performing a plurality of searches of the data contained in the database and retrieving result data in accordance with each of the search criteria in the search request from the database.

7. A method of processing searches of a database-backed website as claimed in claim 6 in which the method further comprises the step of filtering the result data retrieved in each of the plurality of searches through the expert system layer associated with the database using at least one rule specific to the information contained in the database.

8. A method of processing searches of a database-backed website as claimed in claim 6 or 7 in which the method further comprises the step of returning the filtered result data of each of the plurality of searches to the web browser of the user that issued the database search request via the web server.

9. A method of processing searches of a database-backed website as claimed in claim 8 in which the filtered result data of each of the plurality of searches is returned to the web browser of the user that issued the database search request in a single web page format.

10. A method of processing searches of a database-backed website as claimed in any preceding claim in which the method comprises the step of the expert system layer transforming the content of the rules into a scripting language used to create web pages.

11. A method of processing searches of a database-backed website as claimed in claim 10 in which a website display for viewing on the browser is built by the web server on the fly using the filtered results from the database and using rules of the expert system layer expressed in a scripting language.

12. A method of processing searches of a database-backed website as claimed in any preceding claim in which the rules are subdivided into hard coded rules and rules in a hierarchical structure, and the method further comprises the step of performing the hard coded rules prior to performing the remaining rules in the hierarchical structure in a hierarchical fashion.

13. A method of processing searches of a database-backed website as claimed in any preceding claim in which the results are passed back through the expert system layer and the expert system layer uses the results to partially control the display of the website viewed by the user on their browser.

14. A method of processing searches of a database-backed website as claimed in any preceding claim in which expert system layer further comprises a mediator and the mediator resolves a series of potentially conflicting results generated from a search request.

15. A method of processing searches of a database-backed website as claimed in any preceding claim in which the method comprises the steps of performing a plurality of refined searches on the results of a search prior to returning the results to the user.

16. A method of processing searches of a database-backed website as claimed in any preceding claim in which the search engine uses different criteria for searching different databases or searching different parts of a database.

17. A method of processing searches of a database-backed website as claimed in any preceding claim in which the rules of the expert system layer collate the results into a meaningful response to the user of the browser that initiated the request.

18. A method of processing searches of a database-backed website as claimed in any preceding claim in which the search engine is a separate search engine carrying out searches of a further database and the method comprises the step of filtering the results of the separate search engine through the expert system layer and applying one or more rules of the expert system layer to those results before providing the filtered results of the search to the user.

19. A method of processing searches of a database-backed website as claimed in claim 18 in which the expert system layer carries out a search of html pages output as results by the separate search engine.

20. A method of processing searches of a database-backed website as claimed in claim 18 in which the expert system layer imports the results of the separate search engine to a database prior to carrying out a search of the results.

21. A method of processing searches of a database-backed website as claimed in claim 18 in which the expert system layer filters the results of the separate search engine, stores the URLs of the filtered results, retrieves the pages associated with the stored URLs and searches the pages using the rules in the expert system layer.

22. A web-embedded expert system for use with a database-backed website, the database-backed website having access to the database containing data and allowing remote users submit search requests to search the data contained in the database through the website using a suitable browser, the web-embedded expert system further comprises:
an expert system layer associated with the database, the expert system layer having rules specific to the information contained in the database thereon and means to apply at least one of the rules to a search request prior to carrying out the search and means to filter the results of the search in response to the search request in accordance with at least one of the rules prior to returning the filtered results to the user.

23. A web embedded expert system for use with a database backed website as claimed in claim 22 in which the expert system layer has means to configure a web page for subsequent transmission to the browser in accordance with rules specified in the expert system layer.

24. A web-embedded expert system for use with a database-backed website as claimed in claim 22 or 23 in which the expert system layer contains rules specific to the user of the browser making the search.

25. A web-embedded expert system for use with a database-backed website as claimed in any of claims 22 to 24 in which the expert system layer contains rules based on the usage of the database.

26. A web-embedded expert system for use with a database-backed website as claimed in claim 25 in which the expert system layer has means to monitor database searches and further comprises means to generate rules based on usage of the database.

27. A web-embedded expert system for use with a database-backed website as claimed in any of claims 22 to 26 in which the expert system layer is formed integrally with the database.

28. A web-embedded expert system for use with a database-backed website as claimed in any of claims 22 to 26 in which the expert system layer is based on a separate device located remote from the database with access to the database.

29. A web-embedded expert system for use with a database-backed website as claimed in any of claims 22 to 28 in which the expert system layer is provided with an interface to allow a website builder specify rules.

30. A web-embedded expert system for use with a database-backed website as claimed in any of claims 22 to 29 in which the means to present information further comprises means to present multiple disparate search requests at the same time.

31. A web-embedded expert system for use with a database-backed website as claimed in any of claims 22 to 30 in which the expert system layer is associated with a plurality of databases and the expert system layer contains rules specific to a plurality of databases.

32. A web-embedded expert system for use with a database-backed website as claimed in any of claims 22 to 31 in which the expert system layer is an integral part of a website display mechanism.

33. A web-embedded expert system for use with a database-backed website as claimed in any of claims 22 to 32 in which the expert system layer comprises a plurality of rules stored within a database table.

34. A web-embedded expert system for use with a database-backed website as claimed in claim 33 in which the rules in the database table are stored in the same database used to store the data used to generate the website.
